# EUROPEAN PATENT APPLICATION

(11) **EP 4 633 234 A1**
(43) Date of publication of application: **15.10.2025**
(21) Application number: 24771126.0
(22) Date of filing: 08.03.2024
(51) Int. Cl.: H04W 28/04, H04W 72/50, H04W 74/08, H04W 76/15, H04W 84/12

(54) **METHOD AND DEVICE FOR PREEMPTION OPERATION IN WIRELESS LAN**

(30) Priority: 10.03.2023 KR 20230031780
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2024/002994
(87) International publication number: WO 2024/191126

(57) **Abstract**

A method and device for a preemption operation in a wireless LAN are provided. A method of a station (STA) comprises transmitting a first data frame to an access point (AP), receiving a response frame including preemption information from the AP in response to the first data frame, and receiving low latency (LL) traffic from the AP based on the preemption information.

## Description

### Technical Field

The present disclosure relates to wireless local area network (WLAN) communication technology, and more specifically, to preemption technology for transmission of low latency (LL) traffic.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

The standards using the wireless LAN technology are being standardized as IEEE 802.11 standards mainly in the Institute of Electrical and Electronics Engineers (IEEE). As the above-described wireless LAN technology has been developed and spread, applications using the wireless LAN technology has been diversified, and a demand for a wireless LAN technology supporting a high throughput and/or high reliability has arisen.

As applications requiring high throughput and/or applications requiring real-time transmission occur, wireless LAN may support communication using an expanded frequency bandwidth and an efficient retransmitting operation. In addition, wireless LAN may support an operation of simultaneously using a plurality of channels or a plurality of links. In other words, wireless LAN may support multi-link transmission. As applications requiring high reliability arise, methods to support transmission of low latency (LL) traffic in wireless LANs may be needed.

Meanwhile, the technologies that are described in the Background section are written to improve the understanding of the background of the present disclosure and may include content that is not already known to those of ordinary skill in the art to which the present disclosure belongs.

### Disclosure

### Technical Problem

An object of the present invention to solve the above problems is to provide a method and device for transmitting low latency (LL) traffic.

### Technical Solution

A method of a station (STA) according to embodiments of the present disclosure to achieve the object comprises transmitting a first data frame to an access point (AP), receiving a response frame including preemption information from the AP in response to the first data frame, and receiving low latency (LL) traffic from the AP based on the preemption information.

The first data frame may include a preemption enable indication (PEI) indicating that the STA supports a preemption operation.

The preemption information may include information indicating a preemption period in which the LL traffic is transmitted.

The preemption period may be set within a transmit opportunity (TXOP) of the STA.

The method of the STA may further comprise transmitting a second data frame to the AP in a remaining TXOP after completing reception of the LL traffic.

The STA and the AP may support communication on multiple links and the preemption information may include information indicating a link on which a preemption operation is performed among the multiple links.

The STA and the AP may support communication on multiple links and the preemption information may be performed on a link on which the preemption information is received among the multiple links.

The preemption information may include information indicating a receiving target of the LL traffic.

The LL traffic may be transmitted using a transmission parameter robust to interference.

A method of an access point (AP) according to embodiments of the present disclosure to achieve the object comprises receiving a data frame from a first station (STA), transmitting a response frame including preemption information to the first STA in response to the data frame and transmitting low latency (LL) traffic based on the preemption information.

The data frame may include a preemption enable indication (PEI) indicating that the first STA supports a preemption operation.

The preemption information may include a preemption period in which the LL traffic is transmitted.

The preemption period may be set within a transmit opportunity (TXOP) of the first STA.

The first STA and the AP may support communication on multiple links and the preemption information may include information indicating a link on which a preemption operation is performed among the multiple links.

The first STA and the AP may support communication on multiple links and the preemption information may be performed on a link on which the preemption information is received among the multiple links.

The preemption information may include information indicating a receiving target of the LL traffic, and the receiving target is the first STA or a second STA.

The LL traffic may be transmitted using a transmission parameter robust to interference.

A station (STA) according to embodiments of the present disclosure to achieve the object comprises at least one processor. The at least one processor causes the STA to transmit a data frame to an access point (AP), receive a response frame including preemption information from the AP in response to the data frame and receive low latency (LL) traffic from the AP based on the preemption information.

The first data frame may include a preemption enable indication (PEI) indicating that the STA supports a preemption operation.

The preemption information may include at least one of information indicating a preemption period in which the LL traffic is transmitted, information indicating a link on which a preemption operation is performed among multiple links or information indicating a receiving target of the LL traffic.

### Advantageous Effects

According to the present disclosure, in a wireless LAN, a STA (station) MLD (multi-link device) (e.g., an STA associated with an STA MLD) can perform synchronized data transmission in multiple links by performing a channel access procedure. The STA MLD can allocate an available transmission period in the multiple links. An AP (access point) MLD (e.g., an AP associated with an AP MLD) can allocate an low latency (LL) communication period within a transmission period (e.g., an available transmission period) of the STA MLD. The communication (e.g., data transmission) of the STA MLD can be interrupted in the LL communication period. In other words, the STA MLD may not transmit data in the LL communication period. A period in which channel detection is impossible may occur in the LL communication period. Even in this case, the STA MLD can transmit data again within the transmission period (e.g., an available transmission period) without performing a separate channel access procedure after the end of the LL communication period. Therefore, communication operations in multiple links can be performed smoothly, and communication efficiency in multiple links can be improved.

### Description of Drawings

FIG. 1 is a block diagram illustrating a first embodiment of a communication node constituting a wireless local area network (LAN) system.
FIG. 2 is a conceptual diagram illustrating a first embodiment of multi-links configured between multi-link devices (MLDs).
FIG. 3 is a timing diagram illustrating a first embodiment of a communication method of a preemption.
FIG. 4 is a timing diagram illustrating a second embodiment of a communication method of a preemption.
FIG. 5 is a timing diagram illustrating a third embodiment of a communication method of a preemption.
FIG. 6 is a timing diagram illustrating a fourth embodiment of a communication method of a preemption.
FIG. 7 is a timing diagram illustrating a fifth embodiment of a communication method of a preemption.
FIG. 8 is a timing diagram illustrating a sixth embodiment of a communication method of a preemption.
FIG. 9 is a timing diagram illustrating a seventh embodiment of a communication method of a preemption.
FIG. 10A is a block diagram showing a first embodiment of a frame including a PEI.
FIG. 10B is a block diagram showing a second embodiment of a frame including a PEI.
FIG. 11 is a block diagram showing a first embodiment of a frame including a PRI.

### Mode for Invention

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or "have" are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a 'wireless communication network'.

In an embodiment, "configuring an operation (e.g., transmission operation)" may mean signaling "configuration information (e.g., information element, parameter) for the operation" and/or "information indicating that the operation is performed". "Configuring an information element (e.g., parameter)" may mean signaling the information element. "Configuring a resource (e.g., resource area)" may mean signaling configuration information of the resource. Frames proposed in the present disclosure may be commonly referred to as a first frame, a second frame, a third frame and the like. A transmission time point of a frame may mean a transmission start time point or a transmission end time point, and a reception time point of a frame may mean a reception start time point or a reception end time point. A transmission time point may be interpreted to correspond to a reception time point. A time point may be interpreted as a time, and a time may be interpreted as a time point.

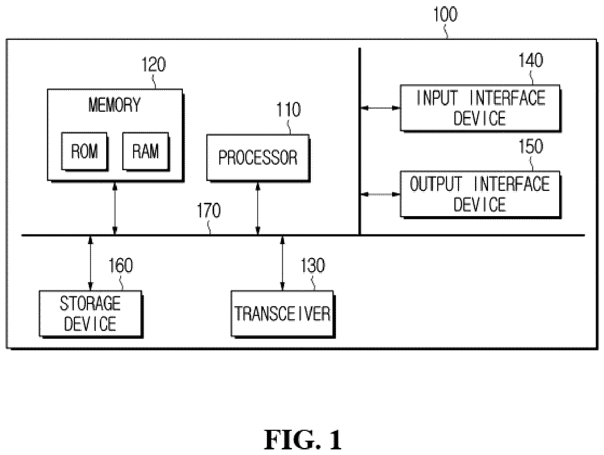

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. The access point may refer to an AP, and the station may refer to a STA or a non-AP STA. The operating channel width supported by the access point may be 20 megahertz (MHz), 80 MHz, 160 MHz, or the like. The operating channel width supported by the station may be 20MHz, 80MHz, or the like.

The communication node 100 may include at least one processor 110, a memory 120, and a plurality of transceivers 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute at least one instruction stored in at least one of the memory 120 and the storage device 160. The processor 110 may refer to a central processing unit (CPU), a graphics processing unit (GPU), or a dedicated processor on which the methods according to the exemplary embodiments of the present invention are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

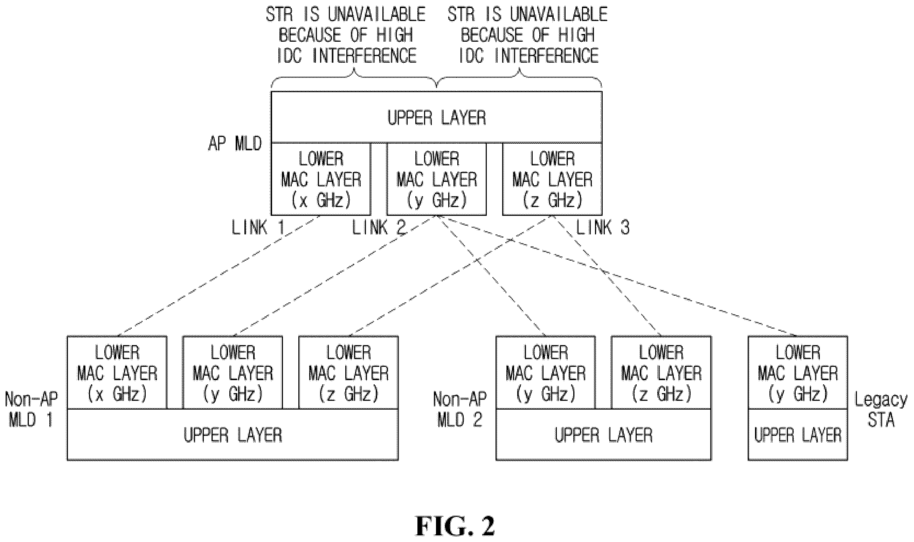

FIG. 2 is a conceptual diagram illustrating a first exemplary embodiment of multi-links configured between MLDs.

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) (STA(s)) affiliated with the non-AP MLD may have different MAC addresses. Each of the APs having different MAC addresses may be in charge of each link among multiple links supported by the AP MLD, and may perform a role of an independent AP.

Each of the STAs having different MAC addresses may be in charge of each link among multiple links supported by the non-AP MLD, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links (i.e., multi-link) by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Altematively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, the respective links may be referred to as a link 1, a link 2, and a link 3. A link number may be set by the AP, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between the link 1 and the link 2 in the frequency domain) is sufficient, the MLD may perform an STR operation. For example, the MLD may transmit a physical layer convergence procedure (PLCP) protocol data unit (PPDU) 1 using the link 1 among multiple links, and may receive a PPDU 2 using the link 2 among multiple links. On the other hand, if the MLD performs the STR operation when the band separation between multiple links is insufficient, in-device coexistence (IDC) interference, which is interference between the multiple links, may occur. Therefore, a link pair with insufficient band separation between multiple links may be a non-STR link pair, and the MLD may operate as a non-STR MLD (e.g., non-STR non-AP (STA) MLD or non-STR AP MLD) that is not capable of STR operations. The AP included in the non-STR AP MLD may be a soft AP. The exemplary embodiments below may be performed by the AP (e.g., AP included in the STR AP MLD) as well as a soft AP (e.g., AP included in the non-STR AP MLD).

For example, a multi-link including a link 1, a link 2, and a link 3 may be configured between the AP MLD and the non-AP MLD 1. If the band separation between the link 1 and the link 3 is sufficient, the AP MLD may perform an STR operation using the link 1 and the link 3. In other words, the AP MLD may transmit a frame using the link 1 and may receive a frame using the link 3. If the band separation between the link 1 and the link 2 is not sufficient, the link 1 and the link 2 may be a non-STR link pair, and the AP MLD or STA MLD may not be able to perform an STR operation using the link 1 and the link 2. If the band separation between the links 2 and 3 is not sufficient, the AP MLD or the STA MLD may not be able to perform an STR operation using the link 2 and 3.

Meanwhile, in a wireless LAN system, a negotiation procedure for a multi-link operation may be performed in an access procedure between a STA and an AP. A device (e.g., AP or STA) supporting a multi-link may be referred to as a multi-link device (MLD). An AP supporting a multi-link may be referred to as an AP MLD, and a STA supporting a multi-link may be referred to as a non-AP MLD or STA MLD. The AP MLD may have a physical address (e.g., MAC address) for each link. The AP MLD may be implemented as if an AP in charge of each link exists separately. A plurality of APs may be managed within one AP MLD. Accordingly, coordination between the plurality of APs belonging to the same AP MLD may be possible. The STA MLD may have a physical address (e.g., MAC address) for each link. The STA MLD may be implemented as if an STA in charge of each link exists separately. A plurality of STAs may be managed within one STA MLD. Accordingly, coordination between the plurality of STAs belonging to the same STA MLD may be possible.

For example, an AP1 of the AP MLD and a STA1 of the STA MLD may each be in charge of a first link and may communicate using the first link. An AP2 of the AP MLD and a STA2 of the STA MLD may each be in charge of a second link, and may communicate using the second link. The STA2 may receive state change information for the first link in the second link. In this case, the STA MLD may collect information (e.g., state change information) received from each link, and may control operations performed by the STA1 based on the collected information.

Next, methods for transmitting and receiving data in a wireless LAN system will be described. When a method (e.g., transmission or reception of a signal) performed in a first communication node among communication nodes is described, a second communication node corresponding to it may perform a method (e.g., reception or transmission of a signal) corresponding to the method performed in the first communication node. In other words, when an operation of an STA is described, an AP corresponding to it may perform an operation corresponding to the operation of the STA. On the other hand, when an operation of an AP is described, an STA corresponding to it may perform an operation corresponding to the operation of the AP.

In the present disclosure, an operation of an STA may be interpreted as an operation of an STA MLD, and an operation of an STA MLD may be interpreted as an operation of an STA. An operation of an AP may be interpreted as an operation of an AP MLD, and an operation of an AP MLD may be interpreted as an operation of an AP. An STA of an STA MLD may mean an STA connected with the STA MLD, and an AP of an AP MLD may mean an AP connected with the AP MLD. When an STA MLD includes a first STA operating on a first link and a second STA operating on a second link, an operation of the STA MLD on the first link may be interpreted as an operation of the first STA, and an operation of the STA MLD on the second link may be interpreted as an operation of the second STA. When an AP MLD includes a first AP operating on a first link and a second AP operating on a second link, an operation of the AP MLD on the first link may be interpreted as an operation of the first AP, and an operation of the AP MLD on the second link may be interpreted as an operation of the second AP.

The embodiments of the present disclosure may be applied to a single link as well as to multiple links. In other words, embodiments described as being applied to multiple links may be applied to a single link in the same and/or similar manner. Embodiments described as being applied to a single link may be applied to multiple links in the same and/or similar manner. A preemption method will be proposed in the present disclosure. The preemption method may mean a priority transmission method. The preemption method may be applied to multiple links and/or a single link. The preemption method may be used for transmission of low latency (LL) traffic. The LL traffic may mean LS (latency sensitive) traffic. The preemption method may be used for transmission of periodic LL traffic and/or aperiodic LL traffic. Altematively, the preemption method may be used for transmission of traffic other than LL traffic (e.g., LS traffic).

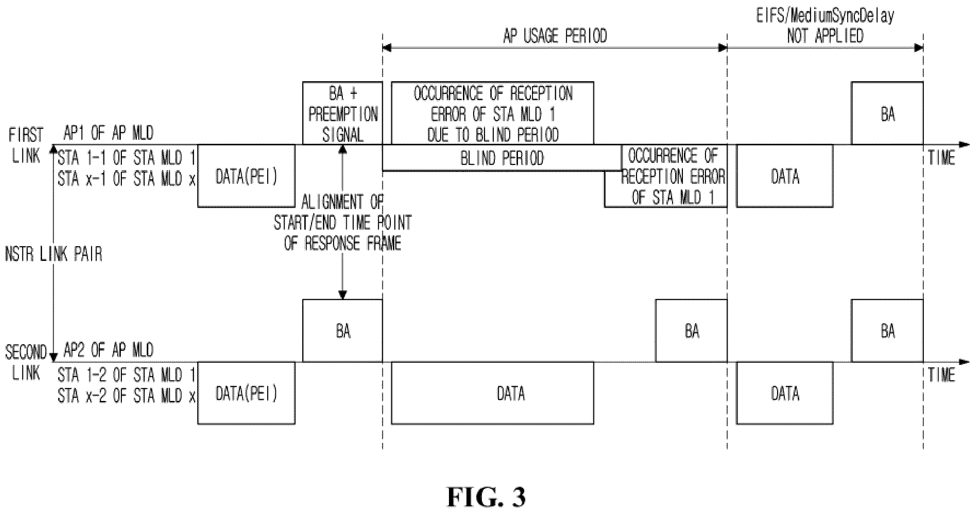

FIG. 3 is a timing diagram illustrating a first embodiment of a preemption method.

Referring to FIG. 3, an AP MLD may operate on multiple links. The multiple links may include a first link and a second link. An AP associated with an AP MLD operating on the first link may be referred to as AP 1, and an AP associated with an AP MLD operating on the second link may be referred to as AP 2. AP 1 and AP 2 may be associated with the AP MLD. An STA associated with an STA MLD (e.g., a non-AP MLD) 1 operating on the first link may be referred to as STA 1-1, and an STA associated with an STA MLD 1 operating on the second link may be referred to as STA 1-2. STA 1-1 and STA 1-2 may be associated with STA MLD 1. A STA MLD other than STA MLD 1 may be referred to as STA MLD x. x may be a natural number. An STA associated with STA MLD x operating on the first link may be referred to as STA x-1, and an STA associated with STA MLD x operating on the second link may be referred to as STA x-2. STA x-1 and STA x-2 may be associated with STA MLD x.

The first link and the second link may be an NSTR link pair for STA MLD 1. In the NSTR link pair, the STA MLD cannot perform simultaneous transmission and reception operations. In other words, STA 1-2 cannot receive a frame while STA 1-1 of STA MLD 1 is transmitting, and STA 1-1 cannot receive a frame while STA 1-2 is transmitting a frame. Therefore, STA MLD 1 may perform synchronized frame transmission in the NSTR link pair (e.g., the first link and the second link). The start times (e.g., the start time points) of the synchronized frame transmission in the NSTR link pair may be the same. The end times (e.g., the end time points) of the synchronized frame transmission in the NSTR link pair may be the same.

STA MLD 1 may perform a channel access procedure on the first link and the second link to transmit a frame (e.g., an uplink frame, a data frame) to the AP MLD. In the present disclosure, the frame may be data, a protocol data unit (PDU), a physical (PHY) layer PDU (PPDU), a medium access control (MAC) layer PDU (MPDU), and/or an aggregated (A)-MPDU. The channel access procedure may be performed independently in each of STA 1-1 and STA 1-2. The channel access procedure may mean an EDCA backoff procedure of an enhanced distributed channel access function (EDCA).

If the channel access procedure of STA MLD 1 on the first link and the second link is successful, STA 1-1 and STA 1-2 associated with STA MLD 1 may transmit frames to the AP MLD. "The channel access procedure on the first link and the second link is successful" may mean "the EDCA backoff counter of EDCAF on one of the first link and the second link reaches 0, and the EDCA backoff counter of EDCAF on the other link also reaches 0." AP 1 associated with the AP MLD may receive a frame from STA 1-1 on the first link, and AP 2 associated with the AP MLD may receive a frame from STA 1-2 on the second link.

When STA 1-1 and STA 1-2 associated with STA MLD 1 decide to transmit frames according to EDCAF, a transmit opportunity (TXOP) may be assigned to each of STA 1-1 and STA 1-2. The frames transmitted by STA 1-1 and STA 1-2 may include a duration field. Altematively, other STA(s) may receive frames from STA 1-1 and/or STA 1-2 and set a network allocation vector (NAV) based on the duration field included in the frames. After transmission of the first frame of STA 1-1 and STA 1-2, the TXOP may be assigned to each of STA 1-1 and STA 1-2. Altematively, if STA 1-1 and STA 1-2 successfully transmit the first frame, the TXOP may be assigned to each of STA 1-1 and STA 1-2. STA MLD 1 may transmit one or more frames within the TXOP of the first link and the second link. "Successful transmission of the first frame" may mean "a response frame for the first frame is normally received." In the present disclosure, the response frame may mean an ACK (acknowledgement) frame and/or a BA (block ACK) frame.

The AP MLD may transmit a response frame for a frame received from STA MLD 1. For example, AP 1 may transmit a response frame for a frame received from STA 1-1 to STA 1-1 on the first link. AP 2 may transmit a response frame for a frame received from STA 1-2 to STA 1-2 on the second link. The response frame transmitted by the AP MLD (e.g., each AP associated with the AP MLD) may include a preemption signal (e.g., preemption information). Altematively, the AP MLD may transmit a separate frame including the preemption signal after transmitting the response frame. The preemption signal may be a preemption enabled indication (PEI) (e.g., a PEI frame) or a preemption indication (PRI) (e.g., a PRI frame). The PEI may indicate that a preemption operation (e.g., a preemption method) is supported (e.g., enabled). In other words, the PEI may indicate that a preemption operation is possible. The PRI may indicate that there is data (e.g., LL traffic, LS traffic) to be transmitted according to the preemption operation. In other words, the PRI may indicate that a preemption operation is performed. The PEI may be included in a frame (e.g., an uplink frame, a data frame) transmitted by STA MLD 1 (e.g., STA 1-1 and/or STA 1-2). In this case, a response frame (e.g., a response frame for a frame of the STA MLD) transmitted by the AP MLD (e.g., AP 1 and/or AP 2) may include a PRI.

When some time periods within the TXOP assigned to the STA are to be used for LL communication, each AP (e.g., AP MLD) may transmit a preemption signal. The preemption signal may include information indicating a time period (e.g., time length, duration, start time point of the time period, end time point of the time period) that the AP intends to use. Transmission of LL traffic may be performed in the time period indicated by the preemption signal. The time period indicated by the preemption signal transmitted by the AP may be referred to as an "AP usage period" or a "preemption period." The preemption signal may include a link bitmap indicating the AP usage period (e.g., a link where the AP usage period is located). The link bitmap may indicate the link(s) on which a preemption operation (e.g., a transmission/reception operation of LL traffic) is performed.

For example, if a link bitmap included in a preemption signal indicates a first link, the AP usage period indicated by the preemption signal may fall within a TXOP assigned to an STA (e.g., STA 1-1) operating on the first link. Altematively, the AP usage period may be applied to a link on which the preemption signal is transmitted. For example, if the preemption signal is transmitted on the first link, the AP usage period indicated by the preemption signal may fall within a TXOP assigned to an STA (e.g., STA 1-1) operating on the first link. The preemption signal may further include target information indicating a receiving target of LL traffic. The target information included in the preemption signal may indicate that the receiving target of the frame transmitted by the AP in the AP usage period is an STA to which a TXOP has been assigned (e.g., a TXOP holder) or an STA other than the STA to which the TXOP has been assigned.

The preemption signal and the response frame transmitted by each AP of the AP MLD may form one frame in the form of an A-MPDU. Alternatively, an information element or an action field included in the response frame may be set as a preemption signal. For example, the preemption signal may be included in the A-control field of a QoS Null frame including an ACK policy set to No ACK. The A-control field may be included in a HT control field of the MAC header of the QoS Null frame. The QoS Null frame including the preemption signal and the BA frame (or ACK frame) may form one frame (e.g., one response frame) in the form of an A-MPDU. Altematively, the preemption signal may be included in the MAC header of the BA frame (or ACK frame). An STA operating on a link for which an AP usage period is indicated (e.g., applied) may not transmit a frame until the end time point of the AP usage period. In other words, the STA may not perform frame transmission within the AP usage period.

The response frame transmitted by AP 1 associated with the AP MLD may include a preemption signal. Altematively, a response frame transmitted by AP 1 and/or AP 2 associated with the AP MLD may include a preemption signal, and a link bitmap included in the preemption signal may indicate a first link. An AP usage period may be set within a TXOP of STA 1-1 operating on the first link. The AP usage period may be a time period for communication (e.g., LL communication) between the AP MLD and STA MLD 1. Altematively, the AP usage period may be a time period for communication (e.g., LL communication) between the AP MLD and another STA and/or another STA MLD (e.g., STA MLD x).

The response frames of AP 1 and AP 2 may be synchronized response frames. In other words, the start time point and/or the end time point of the response frame of AP 1 may be synchronized with the start time point and/or the end time point of the response frame of AP 2 on the first link and the second link. In order to synchronize the end time point of the response frame of AP 1 with the end time point of the response frame of AP 2, a padding bit and/or a padding field may be included in at least one of the response frame of AP 1 or the response frame of AP 2.

Within the AP usage period of the first link, AP 1 may perform a transmission and reception operation of a frame (e.g., LL frame, LL traffic). The LL frame may be a frame including LL traffic. "If the AP usage period is set in the first link and the AP usage period is not set in the second link", STA 1-2 of STA MLD 1 may transmit a frame (e.g., an uplink frame) on the second link. Due to the frame transmission of STA 1-2 on the second link, STA 1-1 may not perform channel detection on the first link (e.g., the first link that is an NSTR link pair relationship with the second link). Even if "channel detection is impossible due to NSTR interference within the AP usage period" and/or "a frame reception error occurs within the AP usage period", STA 1-1 may determine that channel occupancy is not lost.

The end time point of frame transmission of STA 1-2 within the TXOP of the second link (e.g., the TXOP of STA 1-2) may be the same as the end time point of the AP usage period on the first link. In this case, STA 1-1 and STA 1-2 may perform synchronized frame transmission within the remaining TXOP. The "end time point of frame transmission of STA 1-2" may mean "the end time point of the frame transmitted by STA 1-2" or "the end time point of reception of a response frame of AP 2 for the frame of STA 1-2." Even if "channel detection is impossible within the AP usage period" and/or "a frame reception error occurs within the AP usage period", STA 1-1 may perform synchronized frame transmission with STA 1-2 within the remaining TXOP without waiting for the EIFS (extended interframe space) or the MediumSyncDelay timer (e.g., a time corresponding to the MediumSyncDelay timer) after the end of the AP usage period. In other words, after the AP usage period ends, STA 1-1 and STA 1-2 may immediately perform synchronized frame transmission. In other words, STA 1-1 and STA 1-2 may perform synchronized frame transmission without performing a channel access procedure. The end time point of all frame transmissions of AP 1 may be the same as the end time point of the AP usage period. Altematively, AP 1 may complete all frame transmissions before the end time point of the AP usage period.

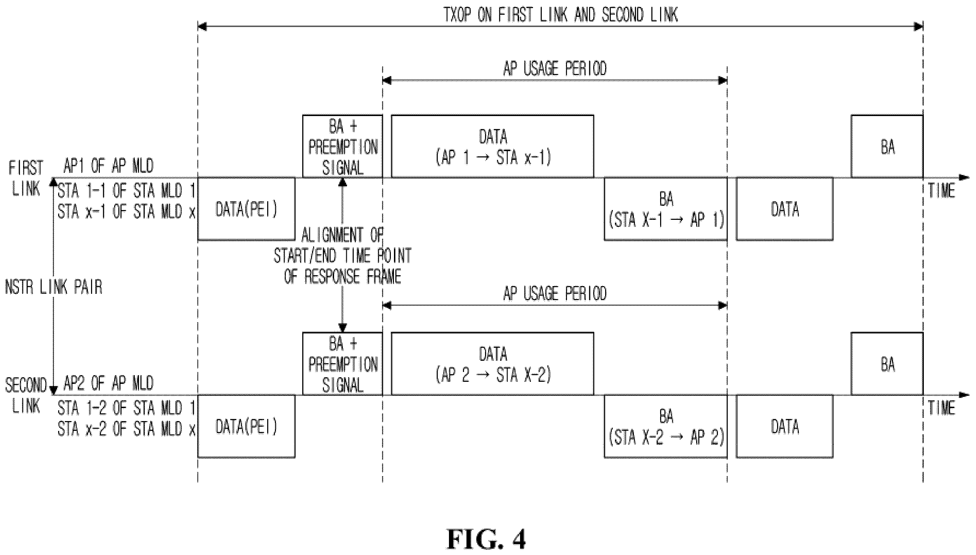

FIG. 4 is a timing diagram illustrating a second embodiment of a preemption method.

Referring to FIG. 4, an AP MLD may operate in multiple links. The multiple links may include a first link and a second link. An AP associated with an AP MLD operating on the first link may be referred to as AP 1, and an AP associated with an AP MLD operating on the second link may be referred to as AP 2. AP 1 and AP 2 may be associated with the AP MLD. An STA associated with an STA MLD (e.g., a non-AP MLD) 1 operating on the first link may be referred to as STA 1-1, and an STA associated with an STA MLD 1 operating on the second link may be referred to as STA 1-2. STA 1-1 and STA 1-2 may be associated with STA MLD 1. An STA MLD other than STA MLD 1 may be referred to as STA MLD x. x may be a natural number. An STA associated with STA MLD x operating on the first link may be referred to as STA x-1, and an STA associated with STA MLD x operating on the second link may be referred to as STA x-2. STA x-1 and STA x-2 may be associated with STA MLD x.

The first link and the second link may be an NSTR link pair for STA MLD 1. In the NSTR link pair, the STA MLD cannot perform simultaneous transmission and reception operations. In other words, STA 1-2 cannot receive a frame while STA 1-1 of STA MLD 1 is transmitting, and STA 1-1 cannot receive a frame while STA 1-2 is transmitting a frame. Therefore, STA MLD 1 may perform synchronized frame transmission in the NSTR link pair (e.g., the first link and the second link). The start times (e.g., the start time points) of the synchronized frame transmission in the NSTR link pair may be the same. The end times (e.g., the end time points) of the synchronized frame transmission in the NSTR link pair may be the same.

STA MLD 1 may perform a channel access procedure on the first link and the second link to transmit a frame (e.g., an uplink frame, a data frame) to the AP MLD. In the present disclosure, the frame may be data, PDU, PPDU, MPDU, and/or A-MPDU. The channel access procedure may be performed independently in each of STA 1-1 and STA 1-2. The channel access procedure may mean an EDCA backoff procedure of EDCAF.

If the channel access procedure of STA MLD 1 on the first link and the second link is successful, STA 1-1 and STA 1-2 associated with STA MLD 1 may transmit frames to the AP MLD. "The channel access procedure on the first link and the second link is successful" may mean "the EDCA backoff counter of EDCAF on one of the first link and the second link reaches 0, and the EDCA backoff counter of EDCAF on the other link also reaches 0." AP 1 associated with the AP MLD may receive a frame from STA 1-1 on the first link, and AP 2 associated with the AP MLD may receive a frame from STA 1-2 on the second link.

If STA 1-1 and STA 1-2 associated with STA MLD 1 decide to transmit a frame according to EDCAF, a TXOP may be assigned to each of STA 1-1 and STA 1-2. The frames transmitted by STA 1-1 and STA 1-2 may include a duration field. Altematively, other STA(s) may receive frames from STA 1-1 and/or STA 1-2 and set NAVs based on the duration field included in the frames. After transmission of the first frame of STA 1-1 and STA 1-2, a TXOP may be assigned to each of STA 1-1 and STA 1-2. Alternatively, if STA 1-1 and STA 1-2 successfully transmit the first frame, a TXOP may be assigned to each of STA 1-1 and STA 1-2. STA MLD 1 may transmit one or more frames within the TXOP of the first link and the second link. "Successful transmission of the first frame" may mean "a response frame for the first frame is normally received." In the present disclosure, the response frame may mean an ACK frame and/or a BA frame.

The AP MLD may transmit a response frame for a frame received from STA MLD 1. For example, AP 1 may transmit a response frame for a frame received from STA 1-1 to STA 1-1 on the first link. AP 2 may transmit a response frame for a frame received from STA 1-2 to STA 1-2 on the second link. The response frame transmitted by the AP MLD (e.g., each AP associated with the AP MLD) may include a preemption signal (e.g., preemption information). Altematively, the AP MLD may transmit a separate frame including the preemption signal after transmitting the response frame. The preemption signal may be a PEI (e.g., a PEI frame) or a PRI (e.g., a PRI frame). The PEI may indicate that a preemption operation (e.g., a preemption method) is supported (e.g., enabled). In other words, the PEI may indicate that a preemption operation is possible. The PRI may indicate that there is data (e.g., LL traffic, LS traffic) to be transmitted according to the preemption operation. In other words, the PRI may indicate that a preemption operation is performed. The PEI may be included in a frame (e.g., an uplink frame, a data frame) transmitted by STA MLD 1 (e.g., STA 1-1 and/or STA 1-2). In this case, a response frame (e.g., a response frame for a frame of STA MLD) transmitted by AP MLD (e.g., AP 1 and/or AP 2) may include a PRI.

When some time periods within the TXOP assigned to the STA are to be used for LL communication, each AP (e.g., AP MLD) may transmit a preemption signal. The preemption signal may include information indicating a time period (e.g., time length, duration, start time point of the time period, end time point of the time period) that the AP intends to use. Transmission of LL traffic may be performed in the time period indicated by the preemption signal. The time period indicated by the preemption signal transmitted by the AP may be referred to as an "AP usage period" or a "preemption period." The preemption signal may include a link bitmap indicating the AP usage period (e.g., a link where the AP usage period is located). The link bitmap may indicate the link(s) on which a preemption operation (e.g., a transmission/reception operation of LL traffic) is performed.

For example, if a link bitmap included in the preemption signal indicates the first link and the second link, the AP usage period indicated by the preemption signal may fall within the TXOP assigned to the STA operating on the first link (e.g., STA 1-1) and the TXOP assigned to the STA operating on the second link (e.g., STA 1-2). Altematively, the AP usage period may be applied to the link on which the preemption signal is transmitted. For example, if the preemption signal is transmitted on the first link and the second link, the AP usage period indicated by the preemption signal may fall within the TXOP assigned to the STA operating on the first link (e.g., STA 1-1) and the TXOP assigned to the STA operating on the second link (e.g., STA 1-2). The preemption signal may further include target information indicating a receiving target of the LL traffic. The target information included in the preemption signal may indicate that the receiving target of the frame transmitted by the AP in the AP usage period is an STA to which a TXOP has been assigned (e.g., a TXOP holder) or an STA other than the STA to which the TXOP has been assigned.

The preemption signal and the response frame transmitted by each AP of the AP MLD may form one frame in the form of an A-MPDU. Alternatively, an information element or an action field included in the response frame may be set as a preemption signal. For example, the preemption signal may be included in the A-control field of a QoS Null frame including an ACK policy set to No ACK. The A-control field may be included in a HT control field of the MAC header of the QoS Null frame. The QoS Null frame including the preemption signal and the BA frame (or ACK frame) may form one frame (e.g., one response frame) in the form of an A-MPDU. Altematively, the preemption signal may be included in the MAC header of the BA frame (or ACK frame). An STA operating on a link for which an AP usage period is indicated (e.g., applied) may not transmit a frame until the end time point of the AP usage period. In other words, the STA may not perform frame transmission within the AP usage period.

The response frame transmitted by AP 1 and AP 2 associated with the AP MLD may include a preemption signal. Altematively, the response frame transmitted by AP 1 or AP 2 associated with the AP MLD may include a preemption signal, and a link bitmap included in the preemption signal may indicate the first link and the second link. An AP usage period may be set within a TXOP of STA 1-1 operating on the first link and a TXOP of STA 1-2 operating on the second link. The AP usage period may be a time period for communication (e.g., LL communication) between the AP MLD and STA MLD 1. Altematively, the AP usage period may be a time period for communication (e.g., LL communication) between the AP MLD and another STA and/or another STA MLD (e.g., STA MLD x).

The response frames of AP 1 and AP 2 may be synchronized response frames. In other words, the start time point and/or the end time point of the response frame of AP 1 may be synchronized with the start time point and/or the end time point of the response frame of AP 2 on the first link and the second link. In order to synchronize the end time point of the response frame of AP 1 with the end time point of the response frame of AP 2, a padding bit and/or a padding field may be included in at least one of the response frame of AP 1 or the response frame of AP 2.

Within the AP usage period of the first link, AP 1 may perform a transmission and reception operation of a frame (e.g., an LL frame, LL traffic). Within the AP usage period of the second link, AP 2 may perform a transmission and reception operation if a frame (e.g., an LL frame, LL traffic). For example, AP 1 may transmit a frame to STA x-1, and AP 2 may transmit a frame to STA x-2. As another example, AP 1 may transmit a frame to STA x-1, and AP 2 may transmit a frame to STA y-2. y is a natural number different from x. The LL frame may be a frame including LL traffic. The end time point of all frame transmissions of each of AP 1 and AP 2 may be the same as the end time point of the AP usage period. Altematively, each of AP 1 and AP 2 may complete all frame transmissions before the end time point of the AP usage period. After the end of the AP usage period, each of STA 1-1 and STA 1-2 may perform frame transmission within the remaining TXOP. Each of STA 1-1 and STA 1-2 may perform frame transmission immediately within the remaining TXOP. In other words, each of STA 1-1 and STA 1-2 may perform frame transmission without performing a channel access procedure within the remaining TXOP. The frame transmissions of STA 1-1 and STA 1-2 may be synchronized frame transmissions. The AP usage period on the first link and the AP usage period on the second link may be set to have the same end time point.

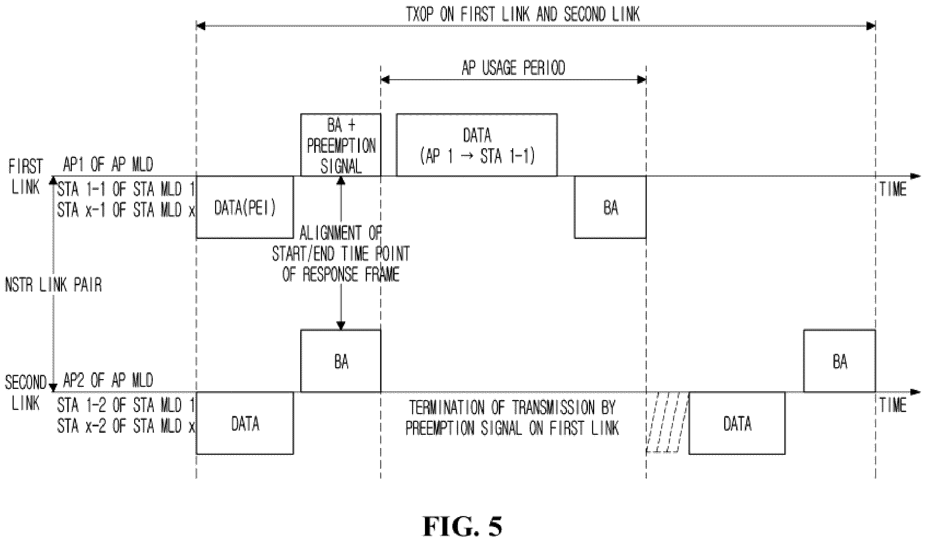

FIG. 5 is a timing diagram illustrating a third embodiment of a preemption method.

Referring to FIG. 5, an AP MLD may operate in multiple links. The multiple links may include a first link and a second link. An AP associated with an AP MLD operating on the first link may be referred to as AP 1, and an AP associated with an AP MLD operating on the second link may be referred to as AP 2. AP 1 and AP 2 may be associated with the AP MLD. An STA associated with an STA MLD 1 (e.g., a non-AP MLD) operating on the first link may be referred to as STA 1-1, and an STA associated with an STA MLD 1 operating on the second link may be referred to as STA 1-2. STA 1-1 and STA 1-2 may be associated with STA MLD 1. A STA MLD other than STA MLD 1 may be referred to as STA MLD x. x may be a natural number. An STA associated with STA MLD x operating on the first link may be referred to as STA x-1, and an STA associated with STA MLD x operating on the second link may be referred to as STA x-2. STA x-1 and STA x-2 may be associated with STA MLD x.

The first link and the second link may be an NSTR link pair for STA MLD 1. In the NSTR link pair, the STA MLD cannot perform simultaneous transmission and reception operations. In other words, STA 1-2 cannot receive a frame while STA 1-1 of STA MLD 1 is transmitting, and STA 1-1 cannot receive a frame while STA 1-2 is transmitting a frame. Therefore, the STA MLD 1 may perform synchronized frame transmission in the NSTR link pair (e.g., the first link and the second link). The start times (e.g., the start time points) of the synchronized frame transmission in the NSTR link pair may be the same. The end times (e.g., the end time points) of the synchronized frame transmission in the NSTR link pair may be the same.

STA MLD 1 may perform a channel access procedure on the first link and the second link to transmit a frame (e.g., an uplink frame, a data frame) to the AP MLD. In the present disclosure, the frame may be data, PDU, PPDU, MPDU, and/or A-MPDU. The channel access procedure may be performed independently in each of STA 1-1 and STA 1-2. The channel access procedure may mean an EDCA backoff procedure of EDCAF.

If the channel access procedure of STA MLD 1 on the first link and the second link is successful, STA 1-1 and STA 1-2 associated with STA MLD 1 may transmit frames to the AP MLD. "The channel access procedure on the first link and the second link is successful" may mean "the EDCA backoff counter of EDCAF on one of the first link and the second link reaches 0, and the EDCA backoff counter of EDCAF on the other link also reaches 0." AP 1 associated with the AP MLD may receive frames from STA 1-1 on the first link, and AP 2 associated with AP MLD may receive frames from STA 1-2 on the second link.

If STA 1-1 and STA 1-2 associated with STA MLD 1 decide to transmit a frame according to EDCAF, a TXOP may be assigned to each of STA 1-1 and STA 1-2. The frames transmitted by STA 1-1 and STA 1-2 may include a duration field. Altematively, other STA(s) may receive frames from STA 1-1 and/or STA 1-2 and set NAVs based on the duration field included in the frames. After transmission of the first frame of STA 1-1 and STA 1-2, a TXOP may be assigned to each of STA 1-1 and STA 1-2. Alternatively, if STA 1-1 and STA 1-2 successfully transmit the first frame, a TXOP may be assigned to each of STA 1-1 and STA 1-2. STA MLD 1 may transmit one or more frames within the TXOP of the first link and the second link. "Successful transmission of the first frame" may mean "a response frame for the first frame is normally received." In the present disclosure, the response frame may mean an ACK frame and/or a BA frame.

The AP MLD may transmit a response frame for a frame received from STA MLD 1. For example, AP 1 may transmit a response frame for a frame received from STA 1-1 to STA 1-1 on the first link. AP 2 may transmit a response frame for a frame received from STA 1-2 to STA 1-2 on the second link. The response frame transmitted by the AP MLD (e.g., each AP associated with the AP MLD) may include a preemption signal (e.g., preemption information). Alternatively, the AP MLD may transmit a separate frame including the preemption signal after transmitting the response frame. The preemption signal may be a PEI (e.g., a PEI frame) or a PRI (e.g., a PRI frame). The PEI may indicate that a preemption operation (e.g., a preemption method) is supported (e.g., enabled). In other words, the PEI may indicate that a preemption operation is possible. The PRI may indicate that there is data (e.g., LL traffic, LS traffic) to be transmitted according to the preemption operation. In other words, the PRI may indicate that a preemption operation is performed. The PEI may be included in a frame (e.g., an uplink frame, a data frame) transmitted by STA MLD 1 (e.g., STA 1-1 and/or STA 1-2). In this case, a response frame (e.g., a response frame for a frame of STA MLD) transmitted by AP MLD (e.g., AP 1 and/or AP 2) may include a PRI.

When some time periods within the TXOP assigned to the STA are to be used for LL communication, each AP (e.g., AP MLD) may transmit a preemption signal. The preemption signal may include information indicating a time period (e.g., time length, duration, start time point of the time period, end time point of the time period) that the AP intends to use. Transmission of LL traffic may be performed in the time period indicated by the preemption signal. The time period indicated by the preemption signal transmitted by the AP may be referred to as an "AP usage period" or a "preemption period." The preemption signal may include a link bitmap indicating the AP usage period (e.g., a link where the AP usage period is located). The link bitmap may indicate the link(s) on which a preemption operation (e.g., a transmission/reception operation of LL traffic) is performed.

For example, if a link bitmap included in a preemption signal indicates a first link, the AP usage period indicated by the preemption signal may fall within a TXOP assigned to an STA (e.g., STA 1-1) operating on the first link. Altematively, the AP usage period may be applied to a link on which the preemption signal is transmitted. For example, if the preemption signal is transmitted on the first link, the AP usage period indicated by the preemption signal may fall within a TXOP assigned to an STA (e.g., STA 1-1) operating on the first link. The preemption signal may further include target information indicating a receiving target of the LL traffic. The target information included in the preemption signal may indicate that a receiving target of a frame transmitted by the AP in the AP usage period is an STA to which a TXOP has been assigned or an STA other than the STA to which the TXOP has been assigned.

The preemption signal and the response frame transmitted by each AP of the AP MLD may belong to one frame in the form of A-MPDU. Altematively, the information element or action field included in the response frame may be set as a preemption signal. For example, the preemption signal may be included in the A-control field of the QoS Null frame including the ACK policy set to No ACK. The A-control field may be included in a HT control field of the MAC header of the QoS Null frame. The QoS Null frame including the preemption signal and the BA frame (or ACK frame) may form one frame (e.g., one response frame) in the form of A-MPDU. Altematively, the preemption signal may be included in the MAC header of the BA frame (or ACK frame). An STA operating on a link for which an AP usage period is indicated (e.g., applied) may not transmit a frame until the end time point of the AP usage period. In other words, the STA may not perform frame transmission within the AP usage period.

The response frame transmitted by AP 1 associated with the AP MLD may include a preemption signal. Altematively, the response frame transmitted by AP 1 and/or AP 2 associated with the AP MLD may include a preemption signal, and a link bitmap included in the preemption signal may indicate the first link. The preemption signal transmitted by AP 1 may further include information indicating performance of communication (e.g., LL communication) between AP 1 and STA 1-1. In other words, the preemption signal may indicate that communication (e.g., LL communication) is performed between AP 1 and STA 1-1 within the AP usage period of the first link. The AP usage period may be set within the TXOP of STA 1-1 operating on the first link. The AP usage period may be a time period for communication (e.g., LL communication) between the AP MLD and STA MLD 1. Alternatively, the AP usage period may be a time period for communication (e.g., LL communication) between the AP MLD and another STA and/or another STA MLD (e.g., STA MLD x). In the present embodiment, the AP usage period may be a period for communication between the AP MLD and STA 1-1 (e.g., STA 1-1 of STA MLD 1) that is the TXOP holder on the first link.

The response frames of AP 1 and AP 2 may be synchronized response frames. In other words, the start time point and/or the end time point of the response frame of AP 1 may be synchronized with the start time point and/or the end time point of the response frame of AP 2 on the first link and the second link. In order to synchronize the end time point of the response frame of AP 1 with the end time point of the response frame of AP 2, a padding bit and/or a padding field may be included in at least one of the response frame of AP 1 or the response frame of AP 2.

Within the first link (e.g., the AP usage period of the first link), AP 1 may perform a transmission and reception operation of a frame (e.g., an LL frame, LL traffic). Within the first link (e.g., the AP usage period of the first link), STA 1-1 may perform a transmission and reception operation of a frame (e.g., an LL frame, LL traffic). STA 1-2 may receive a response frame from AP 1-2. After that, if the AP usage period is set in the first link, STA 1-2 may not transmit the frame. In other words, within the time period of the second link corresponding to the AP usage period of the first link, STA 1-2 may not perform frame transmission. "STA 1-2 not transmitting a frame within the TXOP" may be interpreted as "interruption of the TXOP assigned to STA 1-2." Altematively, "STA 1-2 not transmitting a frame within the TXOP" may be interpreted as "suspension of the TXOP assigned to STA 1-2", and "suspension of the TXOP" may mean "TXOP is not completely terminated and may be resumed after the end of AP usage period".

STA(s) other than STA 1-2 may set NAV based on the duration field included in the frame transmitted by STA 1-2, and may not transmit the frame within the remaining TXOP of STA 1-2. The TXOP of STA 1-2 may be maintained. After the type of AP usage period, STA 1-2 may transmit the frame by performing a channel access procedure on the second link. The channel access procedure of STA 1-2 may be performed based on the existing EDCA parameters, the initial EDCA parameters, or the increased EDCA parameters. The EDCA parameters may include a contention window (CW) [access category (AC)] and/or a quality of service (QoS) short retry counter (QSRC) [AC]. If the channel access procedure is successful, STA 1-2 may obtain the TXOP again. In other words, it may be considered that STA 1-2 obtains the TXOP again. Alternatively, it may be considered that STA 1-2 has recovered the TXOP through a backoff procedure (e.g., channel access procedure).

Alternatively, after the end of the AP usage period of the first link, STA 1-2 may transmit a frame without performing a separate channel access procedure. In other words, STA 1-2 may transmit a frame immediately. The end time point of all frame transmissions of AP 1 may be the same as the end time point of the AP usage period. Alternatively, AP 1 may complete all frame transmissions before the end time point of the AP usage period. After the end of the AP usage period, each of STA 1-1 and STA 1-2 may transmit a frame immediately within the remaining TXOP. In other words, each of STA 1-1 and STA 1-2 may transmit a frame without performing the channel access procedure. Alternatively, each of STA 1-1 and STA 1-2 may transmit a frame by performing the channel access procedure within the remaining TXOP. STA 1-1 and STA 1-2 may perform synchronized frame transmission. Alternatively, the start time point and/or end time point of frame transmission of STA 1-1 may not be synchronized with the start time point and/or end time point of frame transmission of STA 1-2.

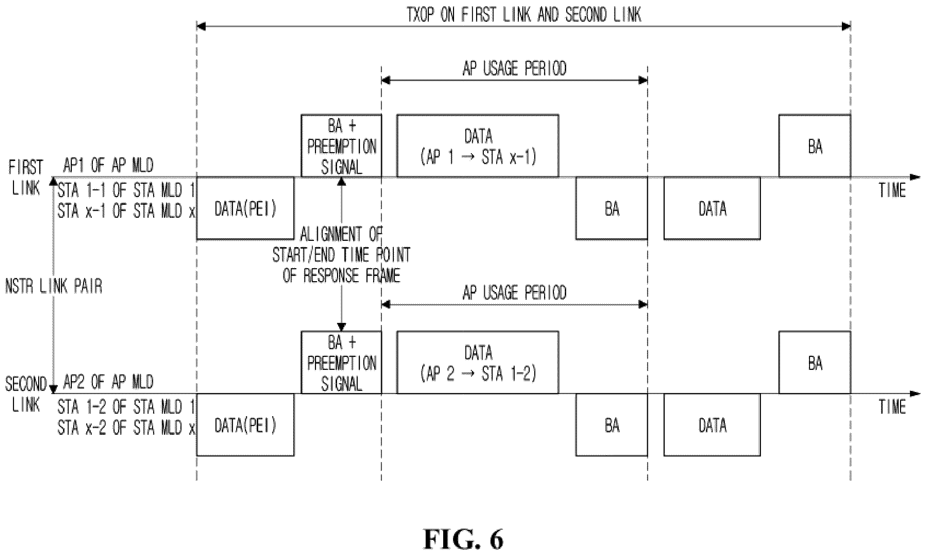

FIG. 6 is a timing diagram illustrating a fourth embodiment of a preemption method.

Referring to FIG. 6, an AP MLD may operate in multiple links. The multiple links may include a first link and a second link. An AP associated with an AP MLD operating on the first link may be referred to as AP 1, and an AP associated with an AP MLD operating on the second link may be referred to as AP 2. AP 1 and AP 2 may be associated with the AP MLD. An STA associated with an STA MLD (e.g., a non-AP MLD) 1 operating on the first link may be referred to as STA 1-1, and an STA associated with an STA MLD 1 operating on the second link may be referred to as STA 1-2. STA 1-1 and STA 1-2 may be associated with STA MLD 1. A STA MLD other than STA MLD 1 may be referred to as STA MLD x. x may be a natural number. An STA associated with STA MLD x operating on the first link may be referred to as STA x-1, and an STA associated with STA MLD x operating on the second link may be referred to as STA x-2. STA x-1 and STA x-2 may be associated with STA MLD x.

The first link and the second link may be an NSTR link pair for STA MLD 1. In the NSTR link pair, the STA MLD cannot perform simultaneous transmission and reception operations. In other words, STA 1-2 cannot receive a frame while STA 1-1 of STA MLD 1 is transmitting, and STA 1-1 cannot receive a frame while STA 1-2 is transmitting a frame. Therefore, STA MLD 1 may perform synchronized frame transmission in the NSTR link pair (e.g., the first link and the second link). The start times (e.g., the start time points) of the synchronized frame transmission in the NSTR link pair may be the same. The end times (e.g., the end time points) of the synchronized frame transmission in the NSTR link pair may be the same.

STA MLD 1 may perform a channel access procedure on the first link and the second link to transmit a frame (e.g., an uplink frame, a data frame) to the AP MLD. In the present disclosure, the frame may be data, PDU, PPDU, MPDU, and/or A-MPDU. The channel access procedure may be performed independently in each of STA 1-1 and STA 1-2. The channel access procedure may mean an EDCA backoff procedure of EDCAF.

If the channel access procedure of STA MLD 1 on the first link and the second link is successful, STA 1-1 and STA 1-2 associated with STA MLD 1 may transmit frames to the AP MLD. "The channel access procedure on the first link and the second link is successful" may mean "the EDCA backoff counter of EDCAF on one of the first link and the second link reaches 0, and the EDCA backoff counter of EDCAF in the other link also reaches 0." AP 1 associated with AP MLD may receive a frame from STA 1-1 on the first link, and AP 2 associated with AP MLD may receive a frame from STA 1-2 on the second link.

If STA 1-1 and STA 1-2 associated with STA MLD 1 decide to transmit a frame according to EDCAF, a TXOP may be assigned to each of STA 1-1 and STA 1-2. The frames transmitted by STA 1-1 and STA 1-2 may include a duration field. Altematively, other STA(s) may receive frames from STA 1-1 and/or STA 1-2 and set NAVs based on the duration field included in the frames. After transmission of the first frame of STA 1-1 and STA 1-2, a TXOP may be assigned to each of STA 1-1 and STA 1-2. Alternatively, if STA 1-1 and STA 1-2 successfully transmit the first frame, a TXOP may be assigned to each of STA 1-1 and STA 1-2. STA MLD 1 may transmit one or more frames within the TXOP of the first link and the second link. "Successful transmission of the first frame" may mean "a response frame for the first frame is normally received." In the present disclosure, the response frame may mean an ACK frame and/or a BA frame.

The AP MLD may transmit a response frame for a frame received from STA MLD 1. For example, AP 1 may transmit a response frame for a frame received from STA 1-1 to STA 1-1 on the first link. AP 2 may transmit a response frame for a frame received from STA 1-2 to STA 1-2 on the second link. The response frame transmitted by the AP MLD (e.g., each AP associated with the AP MLD) may include a preemption signal (e.g., preemption information). Altematively, the AP MLD may transmit a separate frame including the preemption signal after transmitting the response frame. The preemption signal may be a PEI (e.g., a PEI frame) or a PRI (e.g., a PRI frame). The PEI may indicate that a preemption operation (e.g., a preemption method) is supported (e.g., enabled). In other words, the PEI may indicate that a preemption operation is possible. The PRI may indicate that there is data (e.g., LL traffic, LS traffic) to be transmitted according to the preemption operation. In other words, the PRI may indicate that a preemption operation is performed. The PEI may be included in a frame (e.g., an uplink frame, a data frame) transmitted by STA MLD 1 (e.g., STA 1-1 and/or STA 1-2). In this case, a response frame (e.g., a response frame for a frame of STA MLD) transmitted by AP MLD (e.g., AP 1 and/or AP 2) may include a PRI.

When some time periods within the TXOP assigned to the STA are to be used for LL communication, each AP (e.g., AP MLD) may transmit a preemption signal. The preemption signal may include information indicating a time period (e.g., time length, duration, start time point of the time period, end time point of the time period) that the AP intends to use. Transmission of LL traffic may be performed in the time period indicated by the preemption signal. The time period indicated by the preemption signal transmitted by the AP may be referred to as an "AP usage period" or a "preemption period." The preemption signal may include a link bitmap indicating the AP usage period (e.g., a link where the AP usage period is located). The link bitmap may indicate the link(s) on which a preemption operation (e.g., a transmission/reception operation of LL traffic) is performed.

For example, if a link bitmap included in a preemption signal indicates a first link and a second link, an AP usage period indicated by the preemption signal may fall within a TXOP assigned to an STA operating on the first link (e.g., STA 1-1) and a TXOP assigned to an STA operating on the second link (e.g., STA 1-2). Altematively, the AP usage period may be applied to a link on which the preemption signal is transmitted. For example, if the preemption signal is transmitted on the first link and the second link, an AP usage period indicated by the preemption signal may fall within a TXOP assigned to an STA operating on the first link (e.g., STA 1-1) and a TXOP assigned to an STA operating on the second link (e.g., STA 1-2). The preemption signal may further include target information indicating a receiving target of LL traffic. The target information included in the preemption signal may indicate that the receiving target of the frame transmitted by the AP in the AP usage period is an STA to which a TXOP has been assigned (e.g., a TXOP holder) or an STA other than the STA to which the TXOP has been assigned.

The preemption signal and the response frame transmitted by each AP of the AP MLD may form one frame in the form of an A-MPDU. Alternatively, an information element or an action field included in the response frame may be set as a preemption signal. For example, the preemption signal may be included in the A-control field of a QoS Null frame including an ACK policy set to No ACK. The A-control field may be included in a HT control field of the MAC header of the QoS Null frame. The QoS Null frame including the preemption signal and the BA frame (or ACK frame) may form one frame (e.g., one response frame) in the form of an A-MPDU. Altematively, the preemption signal may be included in the MAC header of the BA frame (or ACK frame). An STA operating on a link for which an AP usage period is indicated (e.g., applied) may not transmit a frame until the end time point of the AP usage period. In other words, the STA may not perform frame transmission within the AP usage period.

The response frame transmitted by AP 1 and AP 2 associated with the AP MLD may include a preemption signal. Altematively, the response frame transmitted by AP 1 or AP 2 associated with the AP MLD may include a preemption signal, and a link bitmap included in the preemption signal may indicate the first link and the second link. The preemption signal transmitted by AP 1 may further include information indicating that AP 1 performs communication with STA 1-1. The preemption signal transmitted by AP 2 may further include information indicating that AP 2 performs communication with STA 1-2. In other words, AP MLD 1 may attempt to perform communication (e.g., LL communication) with STA MLD 1 using both the first link and the second link. The AP usage period may be set within the TXOP of STA 1-1 operating on the first link and the TXOP of STA 1-2 operating on the second link. The AP usage period may be a time period for communication (e.g., LL communication) between the AP MLD and STA MLD 1.

The response frames of AP 1 and AP 2 may be synchronized response frames. In other words, the start time point and/or the end time point of the response frame of AP 1 may be synchronized with the start time point and/or the end time point of the response frame of AP 2 on the first link and the second link. In order to synchronize the end time point of the response frame of AP 1 with the end time point of the response frame of AP 2, a padding bit and/or a padding field may be included in at least one of the response frame of AP 1 or the response frame of AP 2.

Within the AP usage period of the first link, transmission and reception operations of frames (e.g., LL frame, LL traffic) between AP 1 and STA 1-1 may be performed. Within the AP usage period of the second link, transmission and reception operations of frames (e.g., LL frame, LL traffic) between AP 2 and STA 1-2 may be performed. The LL frame may be a frame including LL traffic. AP 1 and AP 2 may perform synchronized frame transmission. STA 1-1 and STA 1-2 may perform synchronized frame transmission. The end time point of all frame transmissions of each of AP 1 and AP 2 may be the same as the end time point of the AP usage period. Altematively, AP 1 and AP 2 may complete all frame transmissions before the end time point of the AP usage period. The end time point of all frame transmissions of each of STA 1-1 and STA 1-2 may be the same as the end time point of the AP usage period. Alternatively, each of STA 1-1 and STA 1-2 may complete all frame transmissions before the end time point of the AP usage period.

After the end of the AP usage period, each of STA 1-1 and STA 1-2 may perform frame transmission within the remaining TXOP. Each of STA 1-1 and STA 1-2 may perform frame transmission immediately within the remaining TXOP. In other words, each of STA 1-1 and STA 1-2 may perform frame transmission without performing a channel access procedure within the remaining TXOP. The frame transmissions of STA 1-1 and STA 1-2 may be synchronized frame transmissions. The AP usage period on the first link and the AP usage period on the second link may be set to have the same end time point.

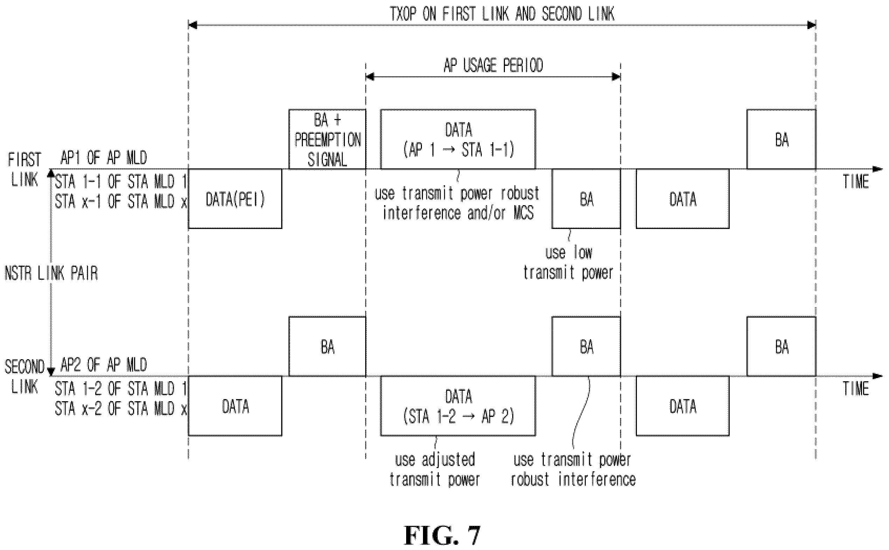

FIG. 7 is a timing diagram illustrating a fifth embodiment of a preemption method.

Referring to FIG. 7, an AP MLD may operate in multiple links. The multiple links may include a first link and a second link. An AP associated with an AP MLD operating on the first link may be referred to as AP 1, and an AP associated with an AP MLD operating on the second link may be referred to as AP 2. AP 1 and AP 2 may be associated with the AP MLD. An STA associated with an STA MLD (e.g., a non-AP MLD) 1 operating on the first link may be referred to as STA 1-1, and an STA associated with an STA MLD 1 operating on the second link may be referred to as STA 1-2. STA 1-1 and STA 1-2 may be associated with STA MLD 1. An STA MLD other than STA MLD 1 may be referred to as STA MLD x. x may be a natural number. An STA associated with STA MLD x operating on the first link may be referred to as STA x-1, and an STA associated with STA MLD x operating on the second link may be referred to as STA x-2. STA x-1 and STA x-2 may be associated with STA MLD x.

The first link and the second link may be an NSTR link pair for STA MLD 1. In the NSTR link pair, the STA MLD cannot perform simultaneous transmission and reception operations. In other words, STA 1-2 cannot receive a frame while STA 1-1 of STA MLD 1 is transmitting, and STA 1-1 cannot receive a frame while STA 1-2 is transmitting a frame. Therefore, STA MLD 1 may perform synchronized frame transmission in the NSTR link pair (e.g., the first link and the second link). The start times (e.g., the start time points) of the synchronized frame transmission in the NSTR link pair may be the same. The end times (e.g., the end time points) of the synchronized frame transmission in the NSTR link pair may be the same.

STA MLD 1 may perform a channel access procedure on the first link and the second link to transmit a frame (e.g., an uplink frame, a data frame) to the AP MLD. In the present disclosure, the frame may be data, PDU, PPDU, MPDU, and/or A-MPDU. The channel access procedure may be performed independently in each of STA 1-1 and STA 1-2. The channel access procedure may mean an EDCA backoff procedure of EDCAF.

If the channel access procedure of STA MLD 1 on the first link and the second link is successful, STA 1-1 and STA 1-2 associated with STA MLD 1 may transmit frames to the AP MLD. "The channel access procedure on the first link and the second link is successful" may mean "the EDCA backoff counter of EDCAF on one of the first link and the second link reaches 0, and the EDCA backoff counter of EDCAF on the other link also reaches 0." AP 1 associated with AP MLD may receive a frame from STA 1-1 on the first link, and AP 2 associated with AP MLD may receive a frame from STA 1-2 on the second link.

If STA 1-1 and STA 1-2 associated with STA MLD 1 decide to transmit frames according to EDCAF, a TXOP may be assigned to each of STA 1-1 and STA 1-2. The frames transmitted by STA 1-1 and STA 1-2 may include a duration field. Altematively, other STA(s) may receive frames from STA 1-1 and/or STA 1-2 and set NAVs based on the duration field included in the frames. After transmission of the first frame of STA 1-1 and STA 1-2, a TXOP may be assigned to each of STA 1-1 and STA 1-2. Altematively, if STA 1-1 and STA 1-2 successfully transmit the first frame, a TXOP may be assigned to each of STA 1-1 and STA 1-2. STA MLD 1 may transmit one or more frames within the TXOP of the first link and the second link. "Successful transmission of the first frame" may mean "a response frame for the first frame is normally received." In the present disclosure, the response frame may mean an ACK frame and/or a BA frame.

The AP MLD may transmit a response frame for a frame received from STA MLD 1. For example, AP 1 may transmit a response frame for a frame received from STA 1-1 to STA 1-1 on the first link. AP 2 may transmit a response frame for a frame received from STA 1-2 to STA 1-2 on the second link. The response frame transmitted by the AP MLD (e.g., each AP associated with the AP MLD) may include a preemption signal (e.g., preemption information). Alternatively, the AP MLD may transmit a separate frame including the preemption signal after transmitting the response frame. The preemption signal may be a PEI (e.g., a PEI frame) or a PRI (e.g., a PRI frame). The PEI may indicate that a preemption operation (e.g., a preemption method) is supported (e.g., enabled). In other words, the PEI may indicate that a preemption operation is possible. The PRI may indicate that there is data (e.g., LL traffic, LS traffic) to be transmitted according to the preemption operation. In other words, the PRI may indicate that a preemption operation is performed. The PEI may be included in a frame (e.g., an uplink frame, a data frame) transmitted by STA MLD 1 (e.g., STA 1-1 and/or STA 1-2). In this case, a response frame (e.g., a response frame for a frame of STA MLD) transmitted by AP MLD (e.g., AP 1 and/or AP 2) may include a PRI.

When some time periods within the TXOP assigned to the STA are to be used for LL communication, each AP (e.g., AP MLD) may transmit a preemption signal. The preemption signal may include information indicating a time period (e.g., time length, duration, start time point of the time period, end time point of the time period) that the AP intends to use. Transmission of LL traffic may be performed in the time period indicated by the preemption signal. The time period indicated by the preemption signal transmitted by the AP may be referred to as an "AP usage period" or a "preemption period." The preemption signal may include a link bitmap indicating the AP usage period (e.g., a link where the AP usage period is located). The link bitmap may indicate the link(s) on which a preemption operation (e.g., a transmission/reception operation of LL traffic) is performed.

For example, if a link bitmap included in a preemption signal indicates a first link, the AP usage period indicated by the preemption signal may fall within a TXOP assigned to an STA (e.g., STA 1-1) operating on the first link. Altematively, the AP usage period may be applied to a link on which the preemption signal is transmitted. For example, if the preemption signal is transmitted on the first link, the AP usage period indicated by the preemption signal may fall within a TXOP assigned to an STA (e.g., STA 1-1) operating on the first link. The preemption signal may further include target information indicating a receiving target of LL traffic. The target information included in the preemption signal may indicate that a receiving target of a frame transmitted by the AP in the AP usage period is to which a TXOP has been assigned or an STA other than the STA to which the TXOP has been assigned.

The preemption signal and the response frame transmitted by each AP of the AP MLD may form one frame in the form of an A-MPDU. Alternatively, an information element or an action field included in the response frame may be set as a preemption signal. For example, the preemption signal may be included in the A-control field of a QoS Null frame including an ACK policy set to No ACK. The A-control field may be included in a HT control field of the MAC header of the QoS Null frame. The QoS Null frame including the preemption signal and the BA frame (or ACK frame) may form one frame (e.g., one response frame) in the form of an A-MPDU. Altematively, the preemption signal may be included in the MAC header of the BA frame (or ACK frame). An STA operating on a link for which an AP usage period is indicated (e.g., applied) may not transmit a frame until the end time point of the AP usage period. In other words, the STA may not perform frame transmission within the AP usage period.

The response frame transmitted by AP 1 associated with the AP MLD may include a preemption signal. Altematively, the response frame transmitted by AP 1 and/or AP 2 associated with the AP MLD may include a preemption signal, and a link bitmap included in the preemption signal may indicate the first link. The preemption signal transmitted by AP 1 may further include information indicating performance of communication (e.g., LL communication) between AP 1 and STA 1-1. In other words, the preemption signal may indicate that communication (e.g., LL communication) is performed between AP 1 and STA 1-1 within the AP usage period of the first link. The AP usage period may be set within the TXOP of STA 1-1 operating on the first link. The AP usage period may be a time period for communication (e.g., LL communication) between the AP MLD and STA MLD 1. Alternatively, the AP usage period may be a time period for communication (e.g., LL communication) between the AP MLD and another STA and/or another STA MLD (e.g., STA MLD x). In the present embodiment, the AP usage period may be a period for communication between the AP MLD and STA 1-1 (e.g., STA 1-1 of STA MLD 1) that is the TXOP holder on the first link.

The response frames of AP 1 and AP 2 may be synchronized response frames. In other words, the start time point and/or the end time point of the response frame of AP 1 may be synchronized with the start time point and/or the end time point of the response frame of AP 2 on the first link and the second link. In order to synchronize the end time point of the response frame of AP 1 with the end time point of the response frame of AP 2, a padding bit and/or a padding field may be included in at least one of the response frame of AP 1 or the response frame of AP 2.

Within the first link (e.g., the AP usage period of the first link), AP 1 may perform a transmission and reception operation of a frame (e.g., an LL frame, LL traffic). Within the first link (e.g., the AP usage period of the first link), STA 1-1 may perform a transmission and reception operation of a frame (e.g., an LL frame, LL traffic). Within the AP usage period, AP 1 may transmit a frame using transmission parameter(s) robust to interference (e.g., high transmit power and/or low MCS (modulation and coding scheme) level). For example, AP 1 may transmit a frame to STA 1-1 using high transmit power and/or low MCS considering NSTR interference of STA MLD 1. Frame transmission using high transmit power and/or low MCS may be performed within the AP usage period. Within the AP usage period, STA 1-1 may receive a frame from AP 1 and transmit a response frame for the frame to AP 1. The response frame of STA 1-1 may be transmitted using low transmit power. In other words, the response frame of STA 1-1 may be transmitted using transmission parameter(s) for minimizing interference.

STA 1-2 may receive a response frame from AP 1-2. After that, if an AP usage period is set in the first link, STA 1-2 may transmit a frame to AP 1-2 using low transmit power considering NSTR interference. In other words, the frame of STA 1-2 may be transmitted using transmission parameter(s) for minimizing frame reception interference of STA 1-1. In a time period of the second link corresponding to the AP usage period of the first link, AP 2 may receive a frame from STA 1-2 and transmit a response frame for the frame to STA 1-2. The response frame of STA 1-2 may be transmitted using high transmit power. In other words, the response frame of STA 1-2 may be transmitted using transmission parameter(s) that are robust to NSTR interference of STA MLD 1. Alternatively, in the time period of the second link corresponding to the AP usage period of the first link, STA 1-2 may not transmit a frame to AP 1-2. If STA 1-2 does not transmit a frame to AP 1-2 in the time period of the second link corresponding to the AP usage period of the first link, AP 1-2 may transmit a dummy frame (e.g., a padding field or a QoS Null frame including a padding field) or a data frame to STA 1-2. Altematively, even if STA 1-2 does not transmit a frame to AP 1-2 in the time period of the second link corresponding to the AP usage period of the first link, AP 1-2 may not transmit a frame to STA 1-2 separately. If STA 1-2 does not transmit a frame to AP 1-2 in a time period of the second link corresponding to the AP usage period of the first link, STA 1-2 may transmit a frame to AP 1-2 after a time period of the second link corresponding to the AP usage period of the first link.

The end time point of frame transmission of STA 1-2 on the second link may be the same as the end time point of the AP usage period on the first link. "The end time point of frame transmission of STA 1-2" may mean "the end time point of the frame transmitted by STA 1-2" or "the end time point of reception of a response frame for the frame transmitted by STA 1-2." The end time point of all frame transmissions of AP 1 may be the same as the end time point of the AP usage period. Altematively, AP 1 may complete all frame transmissions before the end time point of the AP usage period. After the end of the AP usage period, each of STA 1-1 and STA 1-2 may perform frame transmission within the remaining TXOP. Each of STA 1-1 and STA 1-2 may perform frame transmission immediately within the remaining TXOP. In other words, each of STA 1-1 and STA 1-2 may perform frame transmission without performing a channel access procedure within the remaining TXOP. Frame transmission of STA 1-1 and STA 1-2 may be synchronized frame transmission.

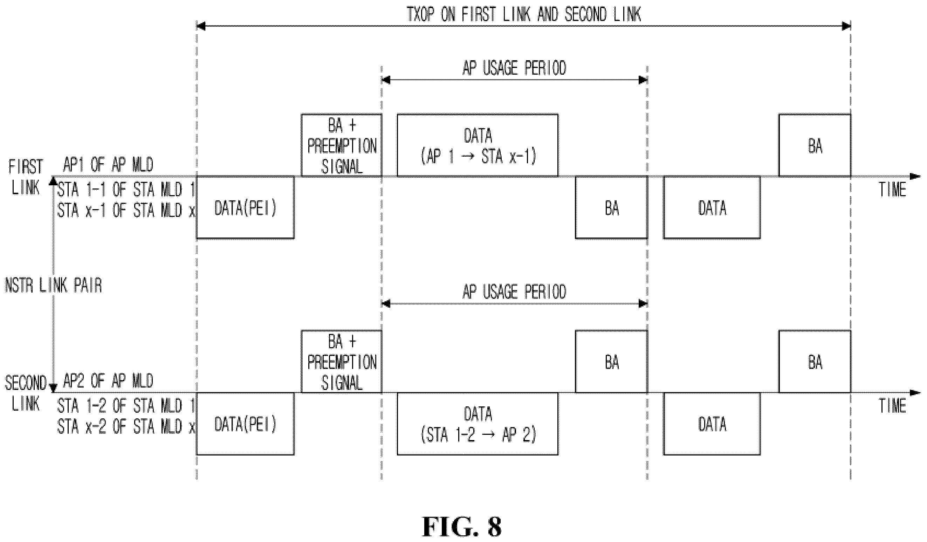

FIG. 8 is a timing diagram illustrating a sixth embodiment of a preemption method.

Referring to FIG. 8, an AP MLD may operate in multiple links. The multiple links may include a first link and a second link. An AP associated with an AP MLD operating on the first link may be referred to as AP 1, and an AP associated with an AP MLD operating on the second link may be referred to as AP 2. AP 1 and AP 2 may be associated with the AP MLD. An STA associated with an STA MLD (e.g., a non-AP MLD) 1 operating on the first link may be referred to as STA 1-1, and an STA associated with an STA MLD 1 operating on the second link may be referred to as STA 1-2. STA 1-1 and STA 1-2 may be associated with STA MLD 1. A STA MLD other than STA MLD 1 may be referred to as STA MLD x. x may be a natural number. An STA associated with STA MLD x operating on the first link may be referred to as STA x-1, and an STA associated with STA MLD x operating on the second link may be referred to as STA x-2. STA x-1 and STA x-2 may be associated with STA MLD x.

The first link and the second link may be an NSTR link pair for STA MLD 1. In the NSTR link pair, the STA MLD cannot perform simultaneous transmission and reception operations. In other words, STA 1-2 cannot receive a frame while STA 1-1 of STA MLD 1 is transmitting, and STA 1-1 cannot receive a frame while STA 1-2 is transmitting a frame. Therefore, STA MLD 1 may perform synchronized frame transmission in the NSTR link pair (e.g., the first link and the second link). The start times (e.g., the start time points) of the synchronized frame transmission in the NSTR link pair may be the same. The end times (e.g., the end time points) of the synchronized frame transmission in the NSTR link pair may be the same.

STA MLD 1 may perform a channel access procedure on the first link and the second link to transmit a frame (e.g., an uplink frame, a data frame) to the AP MLD. In the present disclosure, the frame may be data, PDU, PPDU, MPDU, and/or A-MPDU. The channel access procedure may be performed independently in each of STA 1-1 and STA 1-2. The channel access procedure may mean an EDCA backoff procedure of EDCAF.

If the channel access procedure of STA MLD 1 on the first link and the second link is successful, STA 1-1 and STA 1-2 associated with STA MLD 1 may transmit frames to the AP MLD. "The channel access procedure on the first link and the second link is successful" may mean "the EDCA backoff counter of EDCAF on one of the first link and the second link reaches 0, and the EDCA backoff counter of EDCAF on the other link also reaches 0." AP 1 associated with AP MLD may receive a frame from STA 1-1 on the first link, and AP 2 associated with AP MLD may receive a frame from STA 1-2 on the second link.

If STA 1-1 and STA 1-2 associated with STA MLD 1 decide to transmit a frame according to EDCAF, a TXOP may be assigned to each of STA 1-1 and STA 1-2. The frames transmitted by STA 1-1 and STA 1-2 may include a duration field. Altematively, other STA(s) may receive frames from STA 1-1 and/or STA 1-2 and set NAVs based on the duration field included in the frames. After transmission of the first frame of STA 1-1 and STA 1-2, a TXOP may be assigned to each of STA 1-1 and STA 1-2. Alternatively, if STA 1-1 and STA 1-2 successfully transmit the first frame, a TXOP may be assigned to each of STA 1-1 and STA 1-2. STA MLD 1 may transmit one or more frames within the TXOP of the first link and the second link. "Successful transmission of the first frame" may mean "a response frame for the first frame is normally received." In the present disclosure, the response frame may mean an ACK frame and/or a BA frame.

The AP MLD may transmit a response frame for a frame received from STA MLD 1. For example, AP 1 may transmit a response frame for a frame received from STA 1-1 to STA 1-1 on the first link. AP 2 may transmit a response frame for a frame received from STA 1-2 to STA 1-2 on the second link. The response frame transmitted by the AP MLD (e.g., each AP associated with the AP MLD) may include a preemption signal (e.g., preemption information). Altematively, the AP MLD may transmit a separate frame including the preemption signal after transmitting the response frame. The preemption signal may be a PEI (e.g., a PEI frame) or a PRI (e.g., a PRI frame). The PEI may indicate that a preemption operation (e.g., a preemption method) is supported (e.g., enabled). In other words, the PEI may indicate that a preemption operation is possible. The PRI may indicate that there is data (e.g., LL traffic, LS traffic) to be transmitted according to the preemption operation. In other words, the PRI may indicate that a preemption operation is performed. The PEI may be included in a frame (e.g., an uplink frame, a data frame) transmitted by STA MLD 1 (e.g., STA 1-1 and/or STA 1-2). In this case, a response frame (e.g., a response frame for a frame of STA MLD) transmitted by AP MLD (e.g., AP 1 and/or AP 2) may include a PRI.

When some time periods within the TXOP assigned to the STA are to be used for LL communication, each AP (e.g., AP MLD) may transmit a preemption signal. The preemption signal may include information indicating a time period (e.g., time length, duration, start time point of the time period, end time point of the time period) that the AP intends to use. Transmission of LL traffic may be performed in the time period indicated by the preemption signal. The time period indicated by the preemption signal transmitted by the AP may be referred to as an "AP usage period" or a "preemption period." The preemption signal may include a link bitmap indicating the AP usage period (e.g., a link where the AP usage period is located). The link bitmap may indicate the link(s) on which a preemption operation (e.g., a transmission/reception operation of LL traffic) is performed.

For example, if a link bitmap included in a preemption signal indicates a first link and a second link, the AP usage period indicated by the preemption signal may fall within a TXOP assigned to an STA operating on the first link (e.g., STA 1-1) and a TXOP assigned to an STA operating on the second link (e.g., STA 1-2). Altematively, the AP usage period may be applied to a link on which the preemption signal is transmitted. For example, if the preemption signal is transmitted on the first link and the second link, the AP usage period indicated by the preemption signal may fall within a TXOP assigned to an STA operating on the first link (e.g., STA 1-1) and a TXOP assigned to an STA operating on the second link (e.g., STA 1-2). The preemption signal may further include target information indicating a receiving target of LL traffic. The target information included in the preemption signal may indicate that the receiving target of the frame transmitted by the AP in the AP usage period is an STA to which a TXOP has been assigned (e.g., a TXOP holder) or an STA other than the STA to which the TXOP has been assigned.

The preemption signal and the response frame transmitted by each AP of the AP MLD may form one frame in the form of an A-MPDU. Alternatively, an information element or an action field included in the response frame may be set as a preemption signal. For example, the preemption signal may be included in the A-control field of a QoS Null frame including an ACK policy set to No ACK. The A-control field may be included in a HT control field of the MAC header of the QoS Null frame. The QoS Null frame including the preemption signal and the BA frame (or ACK frame) may form one frame (e.g., one response frame) in the form of an A-MPDU. Altematively, the preemption signal may be included in the MAC header of the BA frame (or ACK frame). An STA operating on a link for which an AP usage period is indicated (e.g., applied) may not transmit a frame until the end time point of the AP usage period. In other words, the STA may not perform frame transmission within the AP usage period.

The response frames transmitted by AP 1 and AP 2 associated with the AP MLD may include a preemption signal. Altematively, the response frames transmitted by AP 1 or AP 2 associated with the AP MLD may include a preemption signal, and a link bitmap included in the preemption signal may indicate the first link and the second link. The preemption signal transmitted by AP 1 may further include information indicating that AP 1 performs communication with another STA x-1 other than STA 1-1. The preemption signal transmitted by AP 2 may further include information indicating that AP 2 performs communication with STA 1-2. An AP usage period may be set within a TXOP of STA 1-1 operating on the first link and a TXOP of STA 1-2 operating on the second link. The AP usage period of the first link may be a time period for communication (e.g., LL communication) between AP 1 and STA x-1. The AP usage period of the second link may be a time period for communication (e.g., LL communication) between AP 2 and STA 1-2.

The response frames of AP 1 and AP 2 may be synchronized response frames. In other words, the start time point and/or the end time point of the response frame of AP 1 may be synchronized with the start time point and/or the end time point of the response frame of AP 2 on the first link and the second link. In order to synchronize the end time point of the response frame of AP 1 with the end time point of the response frame of AP 2, a padding bit and/or a padding field may be included in at least one of the response frame of AP 1 or the response frame of AP 2.

Within the AP usage period of the first link, a transmission and reception operation of a frame (e.g., an LL frame, LL traffic) between AP 1 and STA x-1 may be performed. In other words, AP MLD 1 and STA MLD x may communicate. Within the AP usage period of the second link, a transmission and reception operation of a frame (e.g., an LL frame, LL traffic) between AP 2 and STA 1-2 may be performed. In other words, AP MLD 1 and STA MLD 1 may communicate. STA 1-2 of STA MLD 1 may transmit a frame (e.g., an uplink frame) on the second link. Due to frame transmission of STA 1-2 on the second link, STA 1-1 may not perform channel detection on the first link, which is an NSTR link pair relationship with the second link. Even if "channel detection is impossible due to NSTR interference within the AP usage period" and/or "frame reception error occurs within the AP usage period", STA 1-1 may determine that channel occupancy is not lost.

Even if "channel detection is impossible within the AP usage period" and/or "a frame reception error occurs within the AP usage period", STA 1-1 may perform synchronized frame transmission with STA 1-2 within the remaining TXOP without waiting for EIFS or MediumSyncDelay timer (for example, a time corresponding to the MediumSyncDelay timer) after the end of the AP usage period. STA 1-1 and STA 1-2 may perform synchronized frame transmission immediately. In other words, STA 1-1 and STA 1-2 may perform synchronized frame transmission without performing a channel access procedure. The end time point of all frame transmissions of AP 1 may be the same as the end time point of the AP usage period. Altematively, AP 1 may complete all frame transmissions before the end time point of the AP usage period. The end time point of all frame transmissions of AP 2 may be the same as the end time point of the AP usage period. Altematively, AP 2 may complete all frame transmissions before the end time point of the AP usage period. The AP usage period on the first link and the AP usage period on the second link may be set to have the same end time point.

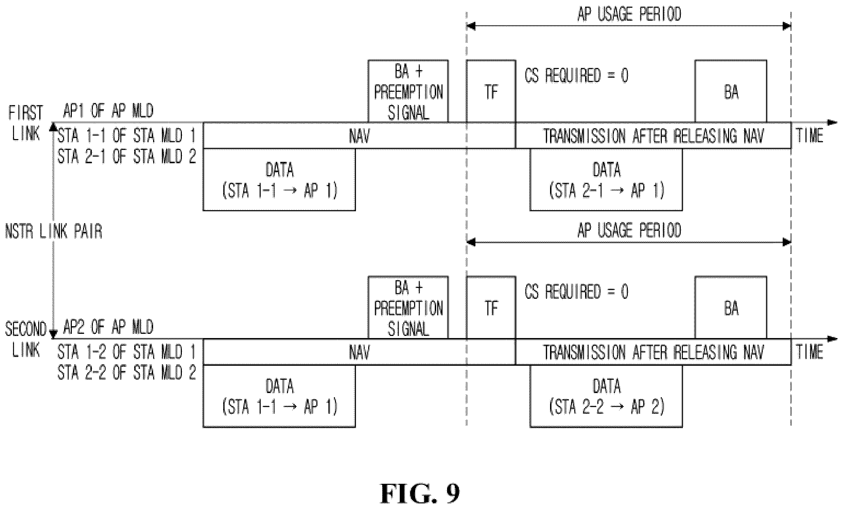

FIG. 9 is a timing diagram illustrating a seventh embodiment of a preemption method.

Referring to FIG. 9, an AP MLD may operate in multiple links. The multiple links may include a first link and a second link. An AP associated with an AP MLD operating on the first link may be referred to as AP 1, and an AP associated with an AP MLD operating on the second link may be referred to as AP 2. AP 1 and AP 2 may be associated with the AP MLD. An STA associated with an STA MLD 1 (e.g., a non-AP MLD) operating on the first link may be referred to as STA 1-1, and an STA associated with an STA MLD 1 operating on the second link may be referred to as STA 1-2. STA 1-1 and STA 1-2 may be associated with STA MLD 1. A STA MLD other than STA MLD 1 may be referred to as STA MLD x. x may be a natural number. An STA associated with STA MLD x operating on the first link may be referred to as STA x-1, and an STA associated with STA MLD x operating on the second link may be referred to as STA x-2. STA x-1 and STA x-2 may be associated with STA MLD x.

Same as or similar to the embodiments of FIGS. 3 to 8, the AP MLD may transmit a response frame including a preemption signal in response to the frame of STA MLD 1. The AP MLD may perform LL communication with the STA MLD x (e.g., STA MLD 2) on one link or two or more links among the multiple links. The AP usage period may be set in the first link and the second link. In the AP usage period of the first link, AP 1 may transmit a trigger frame to STA 2-1 associated with STA MLD 2. STA 2-1 may receive the trigger frame from AP 1. The trigger frame of AP 1 may trigger frame transmission of STA 2-1. The trigger frame may be referred to as TF. In the AP usage period of the second link, AP 2 may transmit a trigger frame to STA 2-2 associated with STA MLD 2. STA 2-2 may receive a trigger frame from AP 2. The trigger frame of AP 2 may trigger frame transmission of STA 2-2.

In the first link, the NAV for STA 2-1 may be set based on the frame transmitted by STA 1-1. In the second link, the NAV for STA 2-2 may be set based on the frame transmitted by STA 1-2. When the NAV is set, each of STA 2-1 and STA 2-2 may not perform frame transmission (e.g., data frame) based on a trigger. To solve the above problem, a CS (carrier detection) required field included in each of a trigger frame transmitted by AP 1 to STA 2-1 and a trigger frame transmitted by AP 2 to STA 2-2 may be set to a first value (e.g., 0). The CS required field set to the first value may indicate ignoring of the NAV setting. In this case, STA 2-1 may ignore the NAV set by the frame transmission of STA 1-1 and perform frame transmission triggered by the trigger frame of AP 1. STA 2-2 may ignore the NAV set by the frame transmission of STA 1-2 and perform frame transmission triggered by the trigger frame of AP 2. The frames transmitted by each of STA 2-1 and STA 2-2 may include MPDU or A-MPDU.

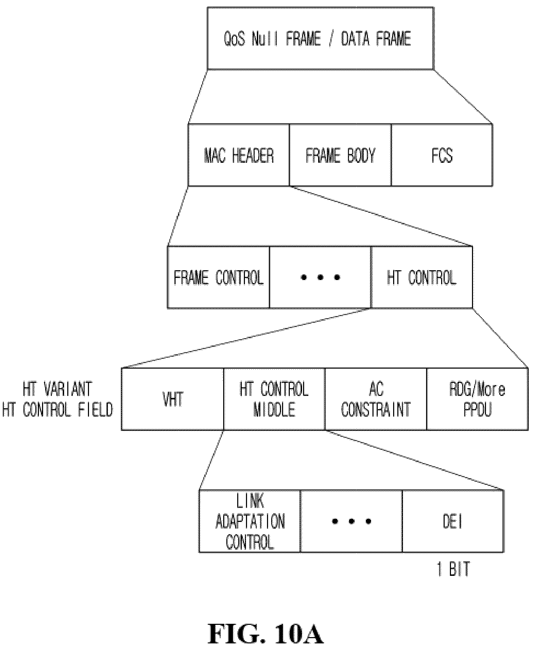

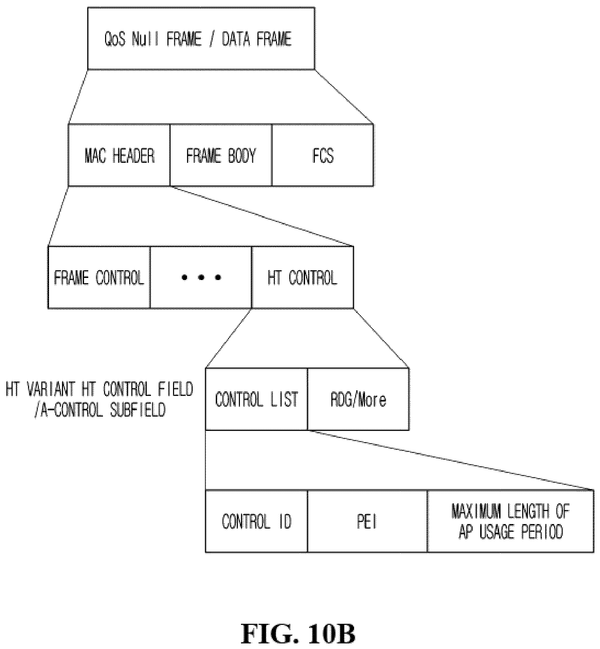

FIG. 10A is a block diagram showing a first embodiment of a frame including a PEI, and FIG. 10B is a block diagram showing a second embodiment of a frame including a PEI.

Referring to FIGS. 10A and 10B, in the embodiments of FIGS. 3 to 9, a frame (e.g., a data frame) transmitted by STA MLD 1 (e.g., STA 1-1 and/or STA 1-2 associated with STA MLD 1) to an AP MLD may include a PEI. The PEI may be included in a MAC header of the data frame. Alternatively, the PEI may be included in a MAC header of a QoS Null frame. The QoS Null frame including the PEI and the frame (e.g., data) transmitted by each of STA 1-1 and STA 1-2 may form one frame in the form of an A-MPDU.

In the embodiment of FIG. 10A, the PEI may be indicated by a drop eligibility indicator (DEI) (e.g., a DEI bit) included in a HT control field of the MAC header. In other words, the DEI may be used to express the PEI. For example, a DEI set to a first value (e.g., 0) may indicate that "the AP is disallowed to set the AP usage period within the TXOP of the STA". In other words, a DEI set to a first value (e.g., 0) may indicate that "the STA does not support the preemption operation". A DEI set to a second value (e.g., 1) may indicate that "the AP is allowed to set the AP usage period within the TXOP of the STA". In other words, a DEI set to a second value (e.g., 1) may indicate that "the STA supports the preemption operation".

In the embodiment of FIG. 10B, the PEI may be included in the HT control field of the MAC header in the form of an A-control field. The A-control field may include at least one of the PEI or information indicating the length (e.g., maximum length) of the AP usage period. The length (e.g., maximum length) of the AP usage period may be indicated in units of time. Altematively, the length (e.g., maximum length) of the AP usage period may be expressed as the number of bits (e.g., maximum bits).

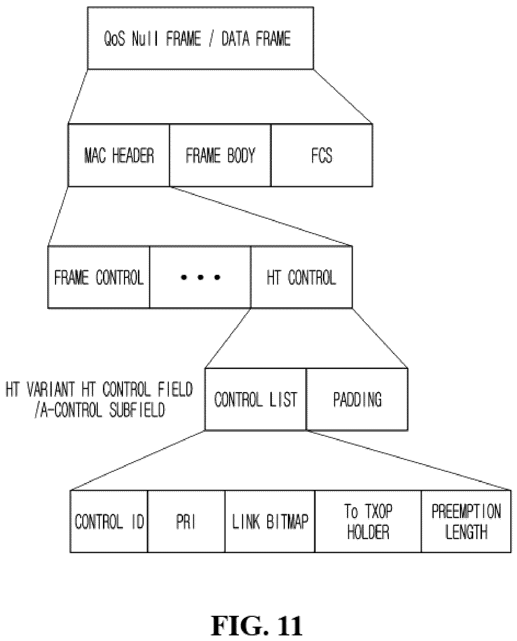

FIG. 11 is a block diagram showing a first embodiment of a frame including a PRI.

Referring to FIG. 11, in the embodiments of FIGS. 3 to 9, the frame (e.g., a data frame) transmitted by the AP MLD (e.g., AP 1 and/or AP 2 associated with the AP MLD) to STA MLD 1 may include a PRI. The PRI may be included in the MAC header of the data frame. Altematively, the PRI may be included in the MAC header of the QoS Null frame. The PRI may be included in the HT Control field of the MAC header in the form of an A-Control field. The A-Control field may include at least one of a Control ID field, a PRI field, a Link Bitmap field, a To TXOP Holder field, or a Preemption Length field. A PRI field set to a first value (e.g., 0) may indicate that a preemption operation is not performed. A PRI field set to a second value (e.g., 1) may indicate that a preemption operation is performed. The link bitmap (e.g., the Link Bitmap field) may indicate the link to which the preemption operation applies. The To TXOP Holder field may indicate whether the receiving target of the frame transmitted within the AP usage period is the TXOP holder (e.g., the STA).

For example, the To TXOP Holder field set to the first value (e.g., 0) may indicate that the receiving target of the frame transmitted within the AP usage period is not the TXOP holder. In other words, when the To TXOP Holder field is set to the first value (e.g., 0), the frame may be transmitted to a receiving target other than the TXOP holder within the AP usage period. The To TXOP Holder field set to the second value (e.g., 1) may indicate that the receiving target of the frame transmitted within the AP usage period is the TXOP holder. In other words, when the To TXOP Holder field is set to the second value (e.g., 1), the frame may be transmitted to the TXOP holder within the AP usage period.

The preemption length field may indicate the length of the AP usage period. The length of the AP usage period may be indicated in units of time. Altematively, the length of the AP usage period may be indicated by the number of bits. If the preemption length field is present in the HT control field, the HT control field may be interpreted as indicating performance of the preemption operation. If the preemption length field is not present in the HT control field, the HT control field may be interpreted as not indicating performance of the preemption operation. Altematively, if the length indicated by the preemption length field is not 0, the preemption length field may be interpreted as indicating performance of the preemption operation. If the length indicated by the preemption length field is 0, the preemption length field may be interpreted as not indicating performance of the preemption operation.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device (e.g., a field-programmable gate array) may be used to perform some or all of functions of the methods described herein. In some exemplary embodiments, the field-programmable gate array may be operated with a microprocessor to perform one of the methods described herein. In general, the methods are preferably performed by a certain hardware device.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

## Claims

1. A method of a station (STA), the method comprising:
transmitting a first data frame to an access point (AP);
receiving a response frame including preemption information from the AP in response to the first data frame; and
receiving low latency (LL) traffic from the AP based on the preemption information.

2. The method of claim 1, wherein the first data frame includes a preemption enable indication (PEI) indicating that the STA supports a preemption operation.

3. The method of claim 1, wherein the preemption information includes information indicating a preemption period in which the LL traffic is transmitted.

4. The method of claim 3, wherein the preemption period is set within a transmit opportunity (TXOP) of the STA.

5. The method of claim 1, further comprising transmitting a second data frame to the AP in a remaining TXOP after completing reception of the LL traffic.

6. The method of claim 1, wherein the STA and the AP support communication on multiple links and the preemption information includes information indicating a link on which a preemption operation is performed among the multiple links.

7. The method of claim 1, wherein the STA and the AP support communication on multiple links and the preemption information is performed on a link on which the preemption information is received among the multiple links.

8. The method of claim 1, wherein the preemption information includes information indicating a receiving target of the LL traffic.

9. The method of claim 1, wherein the LL traffic is transmitted using a transmission parameter robust to interference.

10. A method of an access point (AP), the method comprising:
receiving a data frame from a first station (STA);
transmitting a response frame including preemption information to the first STA in response to the data frame; and
transmitting low latency (LL) traffic based on the preemption information.

11. The method of claim 10, wherein the data frame includes a preemption enable indication (PEI) indicating that the first STA supports a preemption operation.

12. The method of claim 10, wherein the preemption information includes a preemption period in which the LL traffic is transmitted.

13. The method of claim 12, wherein the preemption period is set within a transmit opportunity (TXOP) of the first STA.

14. The method of claim 10, wherein the first STA and the AP support communication on multiple links and the preemption information includes information indicating a link on which a preemption operation is performed among the multiple links.

15. The method of claim 10, wherein the first STA and the AP support communication on multiple links and the preemption information is performed on a link on which the preemption information is received among the multiple links.

16. The method of claim 10, wherein the preemption information includes information indicating a receiving target of the LL traffic, and the receiving target is the first STA or a second STA.

17. The method of claim 10, wherein the LL traffic is transmitted using a transmission parameter robust to interference.

18. A station (STA) comprising:
at least one processor,
wherein the at least one processor causes the STA to:
transmit a data frame to an access point (AP);
receive a response frame including preemption information from the AP in response to the data frame; and
receive low latency (LL) traffic from the AP based on the preemption information.

19. The STA of claim 18, wherein the first data frame includes a preemption enable indication (PEI) indicating that the STA supports a preemption operation.

20. The STA of claim 18, wherein the preemption information includes at least one of information indicating a preemption period in which the LL traffic is transmitted, information indicating a link on which a preemption operation is performed among multiple links or information indicating a receiving target of the LL traffic.
